# EUROPÄISCHE PATENTSCHRIFT

(11) **EP 0 824 420 B1**
(45) Veröffentlichungstag und Bekanntmachung des Hinweises auf die Patenterteilung: **27.10.1999**
(21) Anmeldenummer: 96910899.2
(22) Anmeldetag: 09.04.1996
(51) Int. Cl.: B60R 21/20

(54) **AIRBAGMODUL**
AIR-BAG MODULE
MODULE D'AIRBAG

(30) Priorität: 26.04.1995 DE 19516255
(43) Veröffentlichungstag der Anmeldung: 25.02.1998
(73) Patentinhaber: Petri AG, 63743 Aschaffenburg (DE)
(72) Erfinder: MARX, Roland, D-63739 Aschaffenburg (DE); SCHLETT, Egon, D-63743 Aschaffenburg (DE)
(74) Vertreter: Bärmann, Klaus, Dipl.-Ing.
(86) Internationale Anmeldenummer: DE9600682
(87) Internationale Veröffentlichungsnummer: WO9633888

(56) Entgegenhaltungen:
- WO-A-93/08042
- WO-A-94/25313
- DE-U- 9 110 293
- US-A- 5 263 739

## Beschreibung

Die Erfindung betrifft ein Airbagmodul nach dem Oberbegriff des Anspruchs 1.

Es ist bekannt, Airbagmodule in einem Kraftfahrzeug einzubauen, um die Insassen bei einem Unfall des Kraftfahrzeuges mit Hilfe eines durch einen Gasgenerator automatisch aufgeblasenen Kissens vor Verletzungen zu schützen.

Diese Airbagmodule werden in einem Kraftfahrzeug mit einer Abdeckung versehen. Damit ist das Airbagmodul einerseits vor Beschädigungen geschützt, die eine Gefahr für die Funktionssicherheit des Airbagmoduls darstellen können, und andererseits kann die Abdeckung der ästhetischen Ausgestaltung des Fahrzeuginnenraums angepaßt werden.

Bei bekannten Airbagmodulen wird diese Abdeckung mit Nieten an einem Träger befestigt, auf dem auch der Gasgenerator und der Gassack angeordnet sind.

Bei der Montage des bekannten Airbagmoduls wird der Gasgenerator und der Gassack auf einem kastenförmigen Träger befestigt. Im Boden des Trägers sind Muttern oder Schrauben angebracht, mit denen das Airbagmodul mit dem Fahrzeug verbunden werden kann. Die Abdeckung wird mit Nieten an den Seitenwänden des kastenförmigen Trägers befestigt. Während die Abdeckung aus Kunststoff besteht, ist der kastenförmige Träger aus Aluminium oder Stahl hergestellt.

Die bekannte Befestigung der Abdeckung weist sowohl in ihren mechanischen Eigenschaften als auch bei der Montage zahlreiche Nachteile auf. Die punktuelle Befestigung der aus Kunststoff bestehenden Abdeckung durch Nieten kann bei dauerhafter Beanspruchung der Verbindungsstellen zu Rissen und Brüchen an den Verbindungsstellen führen. Damit die Beanspruchung einer einzelnen Niete nicht übermäßig groß wird, müssen rund um die Seitenwände sehr viele Nieten an der Abdeckung angebracht werden. Die Montage der bekannten Abdeckung auf dem Träger gestaltet sich daher äußerst arbeitsintensiv und es werden umfangreiche Fertigungsanlagen für die Montage benötigt.

Auch eine Wiederverwertung der Abdeckung und des Trägers wird durch die bekannte Befestigungsmethode wesentlich erschwert. Die Nietverbindung kann nicht ohne aufwendige Hilfsmittel gelöst werden. Für eine Trennung der Werkstoffe müssen die Nieten, die Abdeckung und der Träger sauber voneinander abgetrennt werden.

Aus der gattungsbildenden WO 94/25313 ist ein Airbagmodul mit einem Gasgenerator und einem Gassack, mit einem an seinen Stirnseiten offenen Gehäuse für den Gasgenerator und für den Gassack sowie mit einer Gehäuseabdeckung bekannt. Diese weist an gegenüberliegenden Rändern profilierte Abschnitte auf, denen im Gehäuse Ausnehmungen zugeordnet sind, in die die profilierten Abschnitte von einer Stirnseite her einschiebbar sind. Nach dem Einschieben wird das Gehäuse an den Stirnseiten durch Abdeckkappen verschlossen, wobei gleichzeitig die Enden der profilierten Abschnitte fixiert werden.

Dieses Airbagmodul weist den Nachteil auf, daß die gesamte Abdeckkappe von einer Stirnseite des Gehäuses in dieses eingeschoben werden muß, wodurch die Montage erschwert wird und seitlich des Gehäuses ein großer Freiraum erforderlich ist.

Aus der US-A-5 263 739 ist ein Airgabmodul bekannt, bei dem ein Gassack in einem oben offenen kastenförmigen Gehäuse mittels eines Profilstabes befestigt wird. Dieses Gehäuse wird vom einer Stirnseite aus in Profilnuten eines Gasgenerator-Gehäuses geschoben. Auch bei diesem Airbagmodul besteht der Nachteil daß kompakte Baugruppen von der Stirnseite in eine Gehäuse eingebracht werden müssen.

Der Erfindung liegt daher die Aufgabe zugrunde, ein Airbagmodul zu schaffen, das in einfacher Weise an einer dafür vorgesehenen Stelle angebracht werden kann. Desweiteren soll eine Wiederverwertung der eingesetzten Werkstoffe durch eine leichte Demontage des Airbagmoduls ermöglicht werden.

Erfindungsgemäß wird das gemäß den kennzeichnenden Merkmalen des Anspruchs 1 erreicht.

Bei einem Airbagmodul mit mindestens einem Gasgenerator, einer den Gasgenerator tragenden Baugruppe, einem Gassack und einer Abdeckung des Airbagmoduls, wobei die Abdeckung Mittel zur Befestigung aufweist, die zumindest teilweise formschlüssig mit der den Gasgenerator tragenden Baugruppe verbindbar sind, indem die Abdeckung profilierte Abschnitte aufweist, denen in der den Gasgenerator tragenden Baugruppe Ausnehmungen zugeordnet sind, in denen die profilierten Abschnitte verriegelbar einschiebhar sind, ist erfindungsgemäß als Abdeckung eine Abdeckkappe vorgesehen, die an mindestens zwei gegenüberliegenden Seiten federnde Stege mit wulstartigen Verstärkungen aufweist, denen in einem flachen Gasgeneratorträger Nuten zugeordnet sind, die einseitig ein dem Querschnitt der wulstartigen Verstärkungen angepaßtes Hohlprofil aufweisen und breiter als der jeweilige Steg sind und daß zur Verriegelung der Stege mit der den Gasgenerator tragenden Baugruppe in die Nuten einschiebbare Profilleisten vorgesehen sind, denen ein entsprechendes Hohlprofil in den Nuten zugeordnet ist.

Eine solche Abdeckung kann einfach an der den Gasgenerator oder die Gasgeneratoren tragenden Baugruppe angebracht und auch wieder entfernt werden.

Die Stege sind vorzugsweise in Form von Seitenwänden der Abdeckkappe vorgesehen.

Als Baugruppe, die den Gasgenerator trägt, ist vorzugsweise ein plattenförmiger Gasgeneratorträger mit zwei an gegenüberliegenden Seiten vorgesehenen U-förmigen Profilnuten angeordnet. Weiterhin sind zwei in die Profilnuten greifende federnde Stege der Abdeckkappe vorgesehen, wobei die U-Profile abschnittsweise wulstartige Verstärkungen aufweisen, denen unter diese greifende wulstartige Verstärkungen an den Stegen zugeordnet sind.

In einer Ausführungsform weisen die Profilleisten einseitig durchgehende wulstförmige Verstärkungen auf, die in Längsrichtung der Profilnuten in diese einschiebbar sind und denen wulstartige Verstärkungen in den Profilnuten zugeordnet sind.

In dieser letztgenannten Ausführungsform werden zwei gegenüberliegende Stege der Abdeckkappe in die Profilnuten eingesetzt. Wegen der federnd ausgebildeten Stege greifen die wulstartigen Verstärkungen der Stege hinter die wulstartigen Verstärkungen der Profilnuten nach Art eines Schnappverschlusses. Zur Sicherung der Schnappverbindung werden anschließend die Profilleisten in Längsrichtung in die Profilnuten eingeschoben.

In einer weiteren Ausführungsform weisen die Nuten bzw. U-Profile im Bereich der abschnittsweise vorgesehenen wulstartigen Verstärkungen in ihrem Boden Durchbrüche auf. Im Abstand der Durchbrüche sind Profilelemente vorgesehen, die durch die Durchbrüche quer zum Nutverlauf in die Profilnuten einschiebbar sind. Diese Profilelemente sichern die Verbindung zwischen der Abdeckkappe und dem Gasgeneratorträger.

In einer Ausführungsform sind die Profilelemente im Abstand der Durchbrüche an Sicherungsleisten vorgesehen. Die Profilelemente sind durch die Durchbrüche quer zu den Profilnuten in diese einschiebbar und zusammen mit den Sicherungsleisten in der eingeschobenen Stellung in Längsrichtung der Profilnuten verschiebbar.

Zur Erzielung der Verschiebung in Längsrichtung sind die Profilelemente jeweils an einem Ende mit der Sicherungsleiste verbunden und anschließend verlaufen die Profilelemente in einem Abstand zur Sicherungsleiste, wobei der Abstand mindestens der Dicke des Bodens der Profilnuten entspricht. Durch die Verschiebung der Profilelemente in Längsrichtung wird die Verbindung zwischen dem Gasgeneratorträger und der in dessen Profilnuten eingeschobenen Abdeckkappe gesichert.

In einer anderen Ausführungsform weist der Gasgeneratorträger an allen Schmalseiten Profilnuten mit Durchbrüchen im Boden der Profilnuten auf. Durch die Durchbrüche sind Profilelemente in die Profilnuten einschiebbar, die an einem Ring vorgesehen sind.

In einer weiteren Ausführungsform ist die Abdeckkappe an zwei gegenüberliegenden Seiten mittels Profilleisten mit dem Gasgeneratorträger verriegelbar und an zwei senkrecht zu diesen Seiten verlaufenden Seiten ist sie mittels Steckverschlüssen mit dem Gasgeneratorträger verbunden.

Die Steckverschlüsse sind in einer Ausführungsform so ausgestaltet, daß an der Abdeckkappe Schnappelemente mit Lippen vorgesehen sind, denen am Gasgeneratorträger Schlitze mit plastisch verformbaren Stegen zugeordnet sind, wobei die Lippen eine größere Breite als die Schlitze bei unverformten Stegen aufweisen.

Dieser erfindungsgemäße Airbagmodul weist den Vorteil auf, daß deren Abdeckung sowohl leicht zu montieren als auch leicht zu demontieren ist. Damit werden Fertigungskosten eingespart und eine Wiederverwertung des Materials des Airbags bei dessen Aussonderung wird ebenfalls leichter möglich.

In einer weiteren Ausgestaltung der Erfindung ist vorgesehen, daß die Profilnuten des Gasgeneratorträgers in mindestens einer Dimension eine Kontur aufweisen, die von der Geraden abweicht. Dadurch wird ein Herausrutschen der Profilleisten aus den Profilnuten in erhöhtem Maße verhindert.

Der Gasgeneratorträger ist vorzugsweise ein Druckguß- oder Spritzteil.

Die Erfindung soll in Ausführungsbeispielen anhand von Zeichnungen erläutert werden. Es zeigen:
- Fig. 1:: eine erste Ausführungsform des erfindungsgemäßen Airbagmoduls in einer Explosivdarstellung;
- Fig. 2a bis 2c:: vergrößerte perspektivische Ansichten von Ausschnitten des in Figur 1 dargestellten Trägers;
- Fig. 3:: eine geschnittene perspektivische Ansicht der ersten Ausführungsform des zusammengebauten Airbagmoduls;
- Fig. 4:: eine zweite Ausführungsform des erfindungsgemäßen Airbagmodulsmoduls in einer Explosivdarstellung;
- Fig. 5:: eine vergrößerte perspektivische Ansicht eines Ausschnitts des in Figur 4 dargestellten Trägers;
- Fig. 6:: eine geschnittene perspektivische Ansicht der zweiten Ausführungsform des zusammengebauten Airbagmoduls;
- Fig. 7:: eine perspektivische Ansicht eines Trägers einer dritten Ausführungsform des erfindungsgemäßen Gassackmoduls;
- Fig. 8:: eine perspektivische Ansicht eines Trägers einer vierten Ausführungsform des erfindungsgemäßen Gassackmoduls.

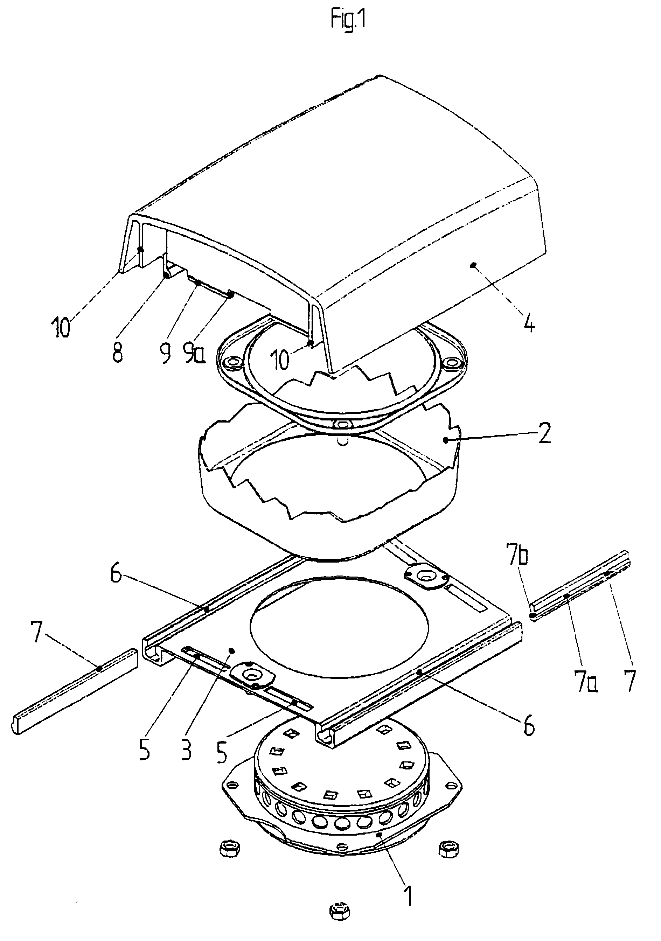

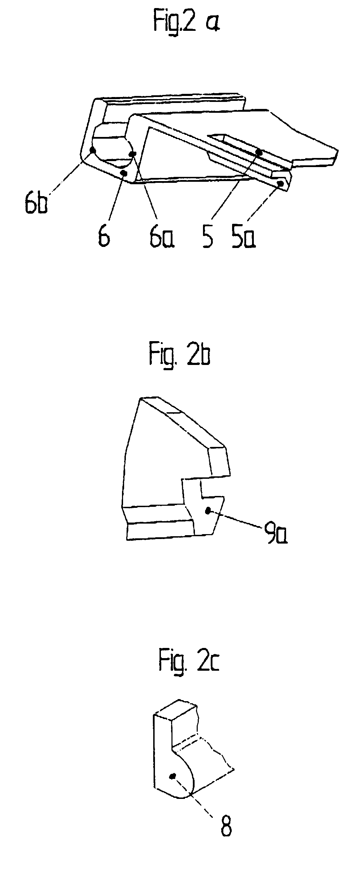

Das in Figur 1 dargestellte Airbagmodul weist einen Gasgenerator 1 und einen gebrochen dargestellten Gassack 2 auf, die beide einem Gasgeneratorträger 3 zugeordnet sind. Der Gasgeneratorträger 3 besitzt auf zwei gegenüberliegenden Seiten je eine Profilnut 6. An den zwei gegenüberliegenden Seiten, die quer zu den Seiten mit den Profilnuten 6 liegen, weist der Gasgeneratorträger 3 je zwei Schlitze 5 auf, an deren einer Seite plastisch verformbare Stege 5a (Fig. 2a) vorgesehen sind.

Dem Gasgeneratorträger 3 ist weiter eine Abdeckkappe 4 zugeordnet, die an zwei gegenüberliegenden Wänden jeweils zwei Steckelemente 9 aufweist, die den Schlitzen 5 des Gasgeneratorträgers 3 zugeordnet sind. Jedes Steckelement 9 ist mit einer Lippe 9a versehen.

Die Abdeckung weist an ihren zwei Seitenwänden 10, die quer zu den Seiten mit den Steckelementen 9 liegen, je ein wulstförmiges Profil 8 auf, welches je einer Profilnut 6 des Generatorträgers 3 zugeordnet ist.

Der in Figur 2a dargestellte Ausschnitt des Generatorträgers 3 zeigt die Profilnut 6 vergrößert. Diese weist eine Querschnittsform auf, die einem abgeflachten "O" entspricht, das oben offen ist, so daß die Profilnut hohlprofilartige Verbreiterungen 6a, 6b gegenüber der offenen Seite der Nut aufweist. Dabei entspricht die hohlprofilartige Erweiterung 6a dem wulstförmigen Profil 8.

Für die Fixierung der Seitenwände 10 in der Profilnut 6, ist jeweils eine Profilleiste 7 vorgesehen, die im Querschnitt auf einer Seite eine wulstartige Verstärkung 7a und gegenüberliegend eine ebene Seite 7b aufweist. Die Profilleiste 7 ist mit ihrer ebenen Seite 7b an die flache Seite des Profils 7 der Abdeckung 4 angrenzend in die Profilnut 6 einschiebbar.

Die Montage der Abdeckkappe 4 erfolgt in der Weise, daß diese nach der Montage des Gasgenerators 1 und des Gassackes 2 auf dem Gasgeneratorträger 3 auf diesen so aufgesetzt wird, daß die Steckelemente 9 über den Schlitzen liegen und die Seitenwände 10 über den Profilnuten 6 liegen. Durch Andruck der Abdeckkappe 4 an den Gasgeneratorträger 3 die Lippen 9a der Steckelemente 9 in die Schlitze 5 eingeführt. Die Stege 5a werden nach dem Einführen der Lippen 9a plastisch verformt. Da die Schlitze bei unverformten Stegen 5a schmaler sind als die Lippen 9a, ist die Abdeckkappe 4 formschlüssig mit dem Generatorträger 3 verbunden.

Die Seitenwände 10 der Abdeckkappe 4 werden bei deren Andruck an den Gasgeneratorträger 3 elastisch nach außen gebogen, bis sie in die hohlprofilartigen Verbreiterungen 6a einrasten und mit ihrem wulstförmigen Profil 8 an diesen anliegen. Damit ist auch an diesen Seiten eine formschlüssige Verbindung zwischen der Abdeckkappe 4 und dem Gasgeneratorträger 3 vorhanden. Zur Sicherung dieser formschlüssigen Verbindung werden anschließend in die Profilnuten 6 die Profilleisten 7 eingeschoben.

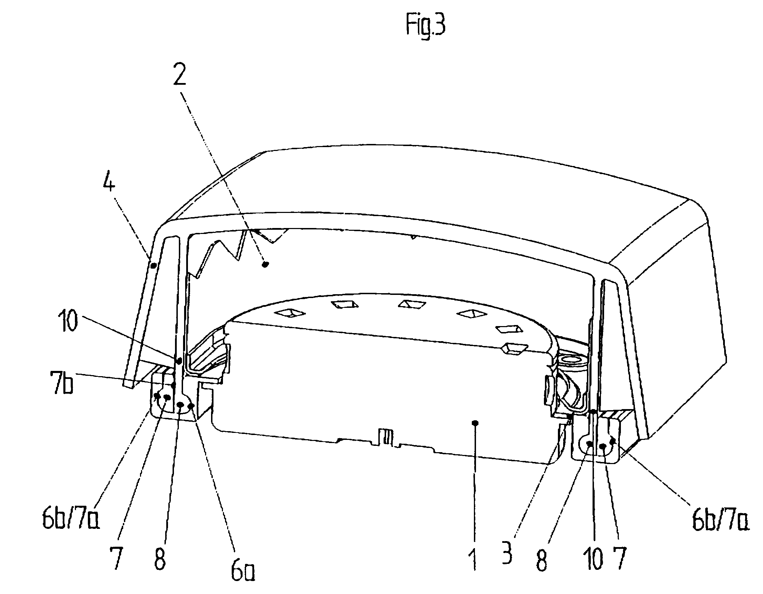

In Figur 3 ist das Gassackmodul in einer geschnittenen perspektivischen Ansicht im zusammengebauten Zustand dargestellt. Der Gasgenerator 1, der Gassack 2 und die Abdeckkappe 4 sind auf dem Gasgeneratorträger 3 angeordnet. Die wulstförmigen Profile 8 der Seitenwände 10 liegen an den hohlprofilartigen Verbreiterungen 6a an. Jede Profilleiste 7 liegt einerseits mit ihrer wulstartigen Verstärkung 7a an der hohlprofilartigen Verbreiterung 6b und andererseits an einer der Seitenwände 10 an. Damit ist es unmöglich, die Abdeckkappe 4 vom Gasgeneratorträger 3 abzuheben.

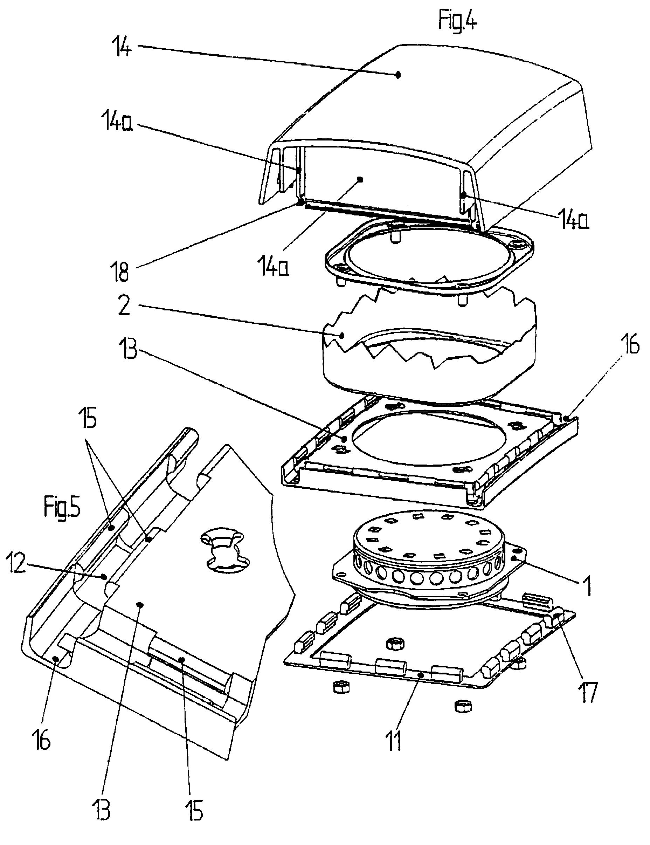

Die in Figur 4 dargestellte zweite Ausführungsform des erfindungsgemäßen Airbagmoduls weist wieder den Gasgenerator 1 und den gebrochen dargestellten Gassack 2 auf, die beide einem Gasgeneratorträger 13 zugeordnet sind. Dieser weist an seinen vier Seiten jeweils eine U-förmige Profilnut 16 auf.

Dem Gasgeneratorträger 13 ist weiter eine Abdeckkappe 14 zugeordnet. An den vier Seitenwänden 14a der Abdeckkappe 14 sind jeweils wulstförmige Profile 18 vorgesehen, die den Profilnuten 16 des Gasgeneratorträgers 13 zugeordnet sind.

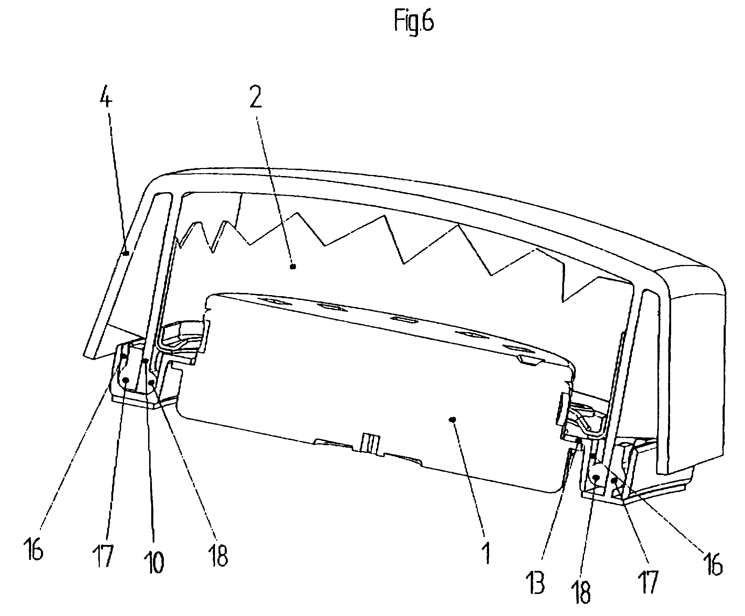

Der in Figur 5 dargestellte Ausschnitt des Gasgeneratorträgers 13 zeigt die U-förmige Profilnut 16 vergrößert. Die Profilnut 16 besitzt an ihrer Unterseite in Richtung des in Figur 4 dargestellten Gasgenerators 1 in regelmäßigen Abständen Durchbrüche 12. In den Bereichen der Durchbrüche 12 weisen die Profilnuten 16 wulstartige Verstärkungen 15 auf. Diese Verstärkungen bewirken eine Verengung der U-förmigen Profilnut 16, so daß diese in diesen Bereichen einen ähnlichen Querschnitt wie die Profilnut 6 im ersten Ausführungsbeispiel aufweist.

Den Durchbrüchen 12 der Profilnut 16 sind Profilelemente 17, die auf einem Ring 11 angebracht sind, zugeordnet.

Die Befestigung der Abdeckkappe 14 an dem Gasgeneratorträger 13 ist in Figur 6 erkennbar. In Figur 6 ist das Gassackmodul in einer geschnittenen perspektivischen Ansicht im zusammengebauten Zustand dargestellt. Der Gasgenerator 1, der Gassack 2 und die Abdeckkappe 14 sind auf dem Gasgeneratorträger 13 angeordnet. Die wulstförmigen Profile 18 der Abdeckung 14 befinden sich in der Profilnut 16 des Gasgeneratorträgers 13. In der Profilnut 16 befinden sich außerdem die auf dem Ring 11 angeordneten Profilelemente 17. Der Ring 11 kann durch unterschiedliche Maßnahmen in seiner Position gehalten werden. Das kann z. B. durch Kleben, durch Einrasten von nicht dargestellten Rastnasen in Löchern des Generatorträgers oder durch Verstemmen von Zapfen in Löchern im Ring erfolgen.

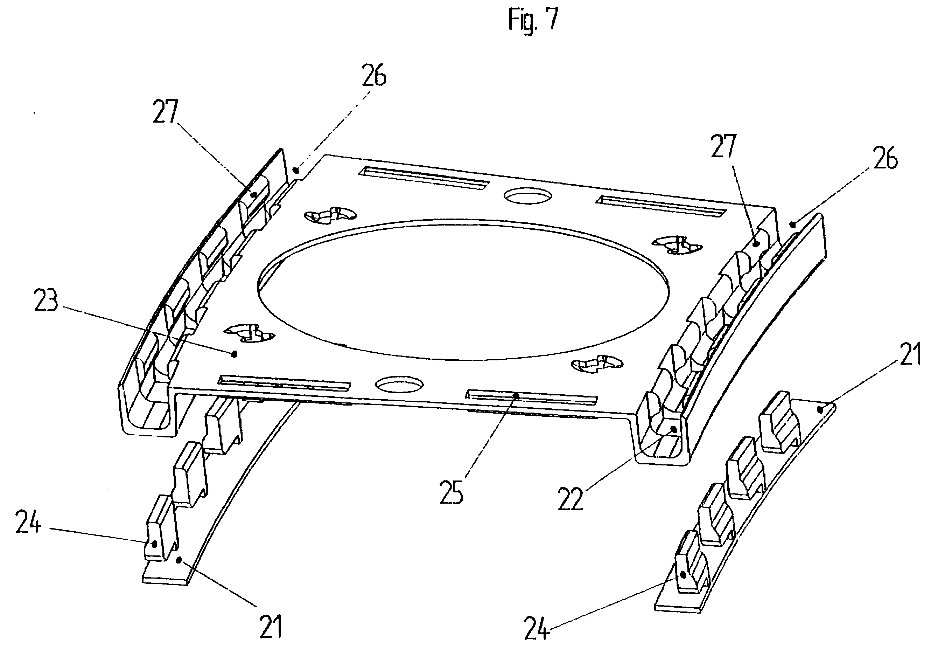

In Figur 7 ist eine perspektivische Ansicht eines Gasgeneratorträgers 23 einer dritten Ausführungsform des erfindungsgemäßen Airbagmoduls dargestellt. Der Gasgeneratorträger 23 weist an zwei sich gegenüberliegenden Seiten je eine Profilnut 26 mit Durchbrüchen 22 auf, in deren Bereich die Profilnut 26 wulstartige Verstärkungen 27 aufweist. Quer zu den Seiten mit Profilnuten 26 befinden sich auf jeder der zwei Seiten zwei Schlitze 25. Die Verbindung der nicht dargestellten Abdeckkappe und die Anordnung der anderen Teile des Gassackmoduls sind entsprechend den vorangegangenen Ausführungsformen ausgeführt. Den Schlitzen 25 sind Steckelemente der Abdeckkappe zugeordnet. Den Profilnuten 26 sind Profile der Abdeckkappe zugeordnet.

Der Unterschied zur Ausführungsform der Figuren 4 bis 6 besteht in der Sicherung der Verbindung zwischen der Abdeckkappe und dem Gasgeneratorträger 23. Die Sicherung erfolgt mittels Sicherungsleisten 21, die Profilelemente 24 aufweisen. Die Profilelemente 24 sind an einem Ende mit der Sicherungsleiste 21 verbunden, während sie im übrigen Bereich im Abstand zur Sicherungsleiste 21 verlaufen. Dieser Abstand entspricht mindestens der Dicke des Bodens der Profilnut 26.

Zur Sicherung der Verbindung zwischen der Abdeckkappe und dem Gasgeneratorträger 23 werden die Profilelemente 24 durch die Durchbrüche 22 in die Profilnuten 26 eingeführt. Anschließend werden die Sicherungsleisten in Längsrichtung der Profilnuten 26 verschoben, wodurch sich dann der Boden der Profilnut 26 zwischen den Profilelementen 24 und der Sicherungsleiste 21 erstreckt.

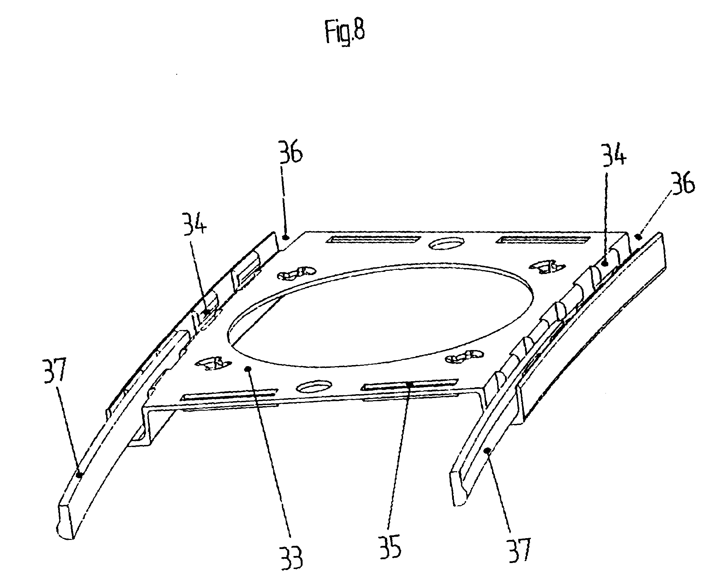

In einer vierten Ausführungsform des erfindungsgemäßen - Airbagmoduls ist in Figur 8 eine perspektivische Ansicht eines Gasgeneratorträgers 33 dargestellt. Der Gasgeneratorträger 33 ist an zwei sich gegenüberliegenden Seiten mit je einer Profilnut 36 versehen, die in Abständen an ihren Seitenwänden wulstartige Verstärkungen 34 aufweisen. Quer zu den Seiten mit den Profilnuten 36 befinden sich auf jeder der zwei Seiten zwei Schlitze 35. Die Verbindung der nicht dargestellten Abdeckung und die Anordnung der anderen Teile des Gassackmoduls ist entsprechend den vorangegangenen Ausführungsformen ausgeführt. Den Schlitzen 35 sind Steckelemente der Abdeckung zugeordnet. Weiter sind der Profilnut 36 Profile der Abdeckung zugeordnet. Die Profile der Abdeckung werden mit einer Profilleiste 37, die in die Profilnut 36 des Gasgeneratorträgers 33 eingeschoben wird, fixiert.

Aus den Figuren 7 und 8 ist erkennbar, daß die Profilnuten 26, 36 gewölbt sind. Dadurch werden die Sicherungsleiste 21 bzw. die Profilleiste 37 beim Einschieben ebenfalls elastisch verformt und sind so in erhöhtem Maßen vor dem Herausrutschen gesichert.

## Patentansprüche

1. Airbagmodul mit mindestens einem Gasgenerator, einer den Gasgenerator tragenden Baugruppe, einem Gassack und einer Abdeckung des Airbagmoduls, wobei die Abdeckung Mittel zur Befestigung aufweist, die zumindest teilweise formschlüssig mit der den Gasgenerator tragenden Baugruppe verbindbar sind, indem die Abdeckung (4, 14) profilierte Abschnitte (8, 18) aufweist, denen in der den Gasgenerator tragenden Baugruppe (3, 13, 23, 33) Ausnehmungen (6, 16, 26, 36) zugeordnet sind, in denen die profilierten Abschnitte verriegelbar einschiebbar sind,
wobei als Abdeckung eine Abdeckkappe (4, 14) vorgesehen ist, die an mindestens zwei gegenüberliegenden Seiten federnde Stege mit wulstartigen Verstärkungen (8, 18) aufweist, **dadurch gekennzeichnet**, daß den Verstarkungen (8, 18) in einem flachen Gasgeneratorträger (3) Nuten (6) zugeordnet sind, die einseitig ein dem Querschnitt der wulstartigen Verstärkungen angepaßtes Hohlprofil (6a) aufweisen und breiter als der jeweilige Steg sind und daß zur Verriegelung der Stege mit der den Gasgenerator tragenden Baugruppe in die Nuten (6) einschiebbare Profilleisten (7) vorgesehen sind, denen ein entsprechendes Hohlprofil (6b) in den Nuten (6) zugeordnet ist.

2. Airbagmodul nach Anspruch 1, **dadurch gekennzeichnet**, daß als Baugruppe, die den Gasgenerator trägt, ein plattenförmiger Gasgeneratorträger (13) mit zwei an gegenüberliegenden Seiten vorgesehenen U-förmigen Profilnuten (16) angeordnet ist, daß zwei in diese Profilnuten greifende federnde Stege (14a) der Abdeckkappe (14) vorgesehen sind, wobei die Profilnuten (16) abschnittsweise wulstartige Verstärkungen (15) aufweisen, denen unter diese greifende wulstartige Verstärkungen (18) an den Stegen (14a) zugeordnet sind.

3. Airbagmodul nach mindestens einem der vorhergehenden Ansprüche, **dadurch gekennzeichnet**, daß die Profilleisten (7, 37) einseitig durchgehende wulstförmige Verstärkungen (7a) aufweisen, daß sie in Längsrichtung der Profilnuten (6, 36) in diese einschiebbar sind und daß den Profilleisten (7, 37) wulstartige Verstärkungen (34) in den Profilnuten zugeordnet sind.

4. Airbagmodul nach mindestens einem der vorhergehenden Ansprüche, **dadurch gekennzeichnet**, daß die Profilnuten (16, 26) im Bereich der abschnittsweise vorgesehenen wulstartigen Verstärkungen (15, 27) in ihrem Boden Durchbrüche (12, 22) aufweisen, durch die quer zum Nutverlauf Profilelemente (17, 24) einschiebbar sind.

5. Airbagmodul nach Anspruch 4, **dadurch gekennzeichnet**, daß die Profilelemente (24) im Abstand der Durchbrüche (22) an Sicherungsleisten (21) vorgesehen sind, daß die Profilelemente (24) durch die Durchbrüche (22) quer zu den Profilnuten (26) in diese einschiebbar sind, und die Sicherungsleisten (21) in der eingeschobenen Stellung in Längsrichtung der Profilnuten (26) verschiebbar sind.

6. Airbagmodul nach Anspruch 5, **dadurch gekennzeichnet**, daß die Profilelemente (24) jeweils an einem Ende mit der Sicherungsleiste verbunden sind und anschließend die Profilelemente (24) im Abstand zur Sicherungsleiste verlaufen, wobei der Abstand mindestens der Dicke des Bodens der Profilnuten entspricht.

7. Airbagmodul nach mindestens einem der vorhergehenden Ansprüche, **dadurch gekennzeichnet**, daß der Gasgeneratorträger (13) an seinen Schmalseiten umlaufende Profilnuten (16) mit Durchbrüchen (12) im Boden der Profilnuten aufweist und daß durch die Durchbrüche (1) Profilelemente (17) einschiebbar sind, die an einem Ring (11) vorgesehen sind.

8. Airbagmodul nach Anspruch 1 bis 6, **dadurch gekennzeichnet**, daß die Abdeckkappe (4) an zwei gegenüberliegenden Seiten mittels Profilleisten (7) mit dem Gasgeneratorträger (3) verriegelbar ist und daß sie an zwei senkrecht zu diesen Seiten verlaufenden Seiten mittels Steckverschlüssen (5, 9) mit dem Generatorträger verbunden ist.

9. Airbagmodul nach mindestens einem der vorhergehenden Ansprüche, **dadurch gekennzeichnet**, daß die Steckverschlüsse so ausgestaltet sind, daß an der Abdeckkappe (4) Steckelemente (9) mit Lippen (9a) vorgesehen sind, denen am Gasgeneratorträger (3) Schlitze (5) mit plastisch verformbaren Stegen (5a) zugeordnet sind, wobei die Lippen eine größere Breite als die Schlitze (5) bei unverformten Stegen (5a) aufweisen.

10. Airbagmodul nach mindestens einem der vorhergehenden Ansprüche, **dadurch gekennzeichnet**, daß die Profilnuten (6) des Gasgeneratorträgers (3) in mindestens einer Dimension eine Kontur aufweisen, die von der Geraden abweicht.

11. Airbagmodul nach mindestens einem der vorhergehenden Ansprüche, **dadurch gekennzeichnet**, daß der Gasgeneratorträger (3) ein Druckguß- oder Spritzteil ist.

## Claims

1. Airbag module with at least one gas generator, a structural group supporting the gas generator, a gas bag and a cover for the airbag module wherein the cover has means for fixing, which are connectable at least in part with keyed engagement with the structural group supporting the gas generator in that the cover (4, 14) has profiled sections (8, 18) associated with recesses (6, 16, 26, 36) in the structural group (3, 13, 23, 33) supporting the gas generator whereby the profiled sections can be pushed and locked into the recesses, wherein a covering cap (4, 14) is provided as the cover and has on at least two opposite sides resilient webs with bead-like reinforcements (8, 18) characterised in that the reinforcements (8, 18) are associated in a flat gas generator support (3) with grooves (6) which have on one side a hollow profiled section (6a) adapted to the cross-sectional shape of the bead-like reinforcements and are wider than the relevant web, and that to lock the webs with the structural group supporting the gas generator profiled strips (7) are provided which can be pushed into the grooves (6) and which are associated with a corresponding hollow profiled section (6b) in the grooves (6).

2. Airbag module according to claim 1 characterised in that as the structural group which supports the gas generator, there is a plate-like gas generator support (13) with two U-shaped profiled grooves (16) on opposite sides wherein two resilient webs (14a) of the covering cap (14) are provided to engage in these profiled grooves whereby the profiled grooves (16) have in sections bead-like reinforcements (15) which are associated with bead-like reinforcements (18) on the webs (14a) which engage under the first reinforcements (15).

3. Airbag module according to at least one of the preceding claims characterised in that the profiled strips (7, 37) have on one side full-length bead-like reinforcements (7a), that these can be pushed into the profiled grooves (6, 36) in the longitudinal direction thereof and that bead-like reinforcements (34) in the profiled grooves are associated with the profiled strips (7, 37).

4. Airbag module according to at least one of the preceding claims characterised in that the profiled grooves (16, 26) have in the area of the bead-like reinforcements (15, 27) provided in sections apertures (12,22) in the base through which profiled elements (17, 24) can be pushed in transversely to the path of the grooves.

5. Airbag module according to claim 4 characterised in that the profiled elements (24) are provided at a distance from the apertures (22) on securing strips (21), that the profiled elements (24) can be pushed through the apertures (22) across the profiled grooves (26) into same, and the securing strips (21) are displaceable in the pushed-in position in the longitudinal direction pf the profiled grooves (26).

6. Airbag module according to claim 5 characterised in that the profiled elements (24) are each connected at one end to a securing strip and then the profiled elements (24) run at a distance from the securing strip wherein the distance corresponds at least to the thickness of the base of the profiled grooves.

7. Airbag module according to at least one of the preceding claims characterised in that the gas generator support (13) has on its narrow sides circumferential profiled grooves (16) with apertures (12) in the base of the profiled grooves and that profiled elements (17) which are provided on a ring (11) can be pushed through the apertures (1).

8. Airbag module according to claim 1 to 6 characterised in that the covering cap (4) can be locked on two opposite sides by means of profiled strips (7) with the gas generator support (3) and that it is connected to the generator support by means of push-in closures (5,9) on two sides running perpendicular to these sides.

9. Airbag module according to at least one of the preceding claims characterised in that the push-in closures are designed so that on the covering cap (4) push-in elements (9) with lips (9a) are provided associated with slits (5) on the gas generator support (3) having plastically deformable webs (5a) whereby the lips have a greater width than the slits (5) in the case of the non-deformed webs (5a).

10. Airbag module according to at least one of the preceding claims characterised in that the profiled grooves (6) of the gas generator support (4) have in at least one dimension a contour which deviates from straight.

11. Airbag module according to at least one of the preceding claims characterised in that the gas generator support (3) is a pressure cast or injection moulded part.

## Revendications

1. Module d'air-bag comportant au moins un générateur de gaz, un module portant le générateur de gaz, un sachet pour le gaz et un élément de recouvrement du module d'air-bag, l'élément de recouvrement comportant des moyens de fixation, qui peuvent être reliés au moins en partie selon une liaison par formes complémentaires au module portant le générateur de gaz, par le fait que l'élément de recouvrement (4, 14) comporte des parties profilées (8, 18) auxquelles sont associés, dans le module (3, 13, 23, 33) portant le générateur de gaz, des évidements (6, 16, 26, 36), dans lesquels peuvent être insérées, avec possibilité de verrouillage, les parties profilées, et dans lequel il est prévu comme élément de recouvrement un capot (4, 14), qui possède, sur au moins deux côtés opposés, des barrettes élastiques comportant des éléments de renforcement en forme de bourrelets (8, 18), caractérisé en ce qu'aux éléments de renforcement (8, 18) sont associées, dans un support plat (3) du générateur de gaz, des rainures (6) qui possèdent d'un côté un profil creux (6a) adapté à la section transversale des éléments de renforcement en forme de bourrelets et ont une largeur supérieure à celle de la barrette respective, et que pour le verrouillage des barrettes avec le module portant le générateur de gaz, il est prévu des barrettes profilées (7), qui peuvent être insérées dans les rainures (6) et auxquelles est associé un profil creux correspondant (6b) présent dans les rainures (6).

2. Module d'air-bag selon la revendication 1, caractérisé en ce qu'un support en forme de plaque (13) du générateur de gaz, qui comporte deux rainures profilées en forme de U (16) prévues sur deux côtés opposés, est disposé en tant que module, qui porte le générateur de gaz, qu'il est prévu deux barrettes élastiques (14a) du capot (14), qui s'engagent dans ces rainures profilées, les rainures profilées (16) possédant par endroits des éléments de renforcement en forme de bourrelets (15), auxquels sont associés des éléments de renforcement en forme de bourrelets (18) qui s'engagent au-dessous des éléments de renforcement précédents et sont situés sur les barrettes (14a).

3. Module d'air-bag selon au moins l'une des revendications précédentes, caractérisé en ce que les barrettes profilées (7, 37) possèdent d'un côté des éléments de renforcement en forme de bourrelets continus (7a), que ces éléments de renforcement Peuvent être insérés dans les rainures profilées (6, 36), dans la direction longitudinale de ces dernières, et que des éléments de renforcement en forme de bourrelets (34) sont associés, dans les rainures profilées, aux barrettes profilées (7, 37).

4. Module d'air-bag selon au moins l'une des revendications précédentes, caractérisé en ce que les rainures profilées (16, 26) comportent dans leur fond, dans la zone des éléments de renforcement en forme de bourrelets (15, 27) prévus par endroits, des passages traversants (12, 22), dans lesquels peuvent être insérés les éléments profilés (17, 24), qui s'étendent transversalement par rapport à la rainure.

5. Module d'air-bag selon la revendication 4, caractérisé en ce que les éléments profilés (24) sont prévus à distance des passages traversants (22), sur des barrettes de sécurité (21), que les éléments profilés (24) peuvent être insérés dans les rainures profilées (26), en passant dans les perçages traversants (22), transversalement par rapport à ces rainures profilées et que dans la position insérée, les barrettes de sécurité (21) peuvent être déplacées dans la direction longitudinale des rainures profilées (26).

6. Module d'air-bag selon la revendication 5, caractérisé en ce que les éléments profilés (24) sont reliés respectivement, au niveau d'une extrémité, à la barrette de sécurité et qu'ensuite les éléments profilés (24) s'étendent à distance de la barrette de sécurité, la distance correspondant au moins à l'épaisseur du fond des rainures profilées.

7. Module d'air-bag selon au moins l'une des revendications précédentes, caractérisé en ce que le support (13) du générateur de gaz comporte, sur ses petits côtés, des rainures profilées périphériques (16) comportant des perçages traversants (12) formés dans le fond des rainures profilées, et que des éléments profilés (17), qui sont prévus sur une bague (11), peuvent être insérés dans les perçages traversants (1).

8. Module d'air-bag selon l'une des revendications 1 à 6, caractérisé en ce que le capot (4) peut être verrouillé sur deux côtés opposés, sur le support (3) du générateur de gaz au moyen de barrettes profilées (7) et que le capot est relié, sur deux côtés perpendiculaires aux côtés précédents, au support du générateur de gaz, à l'aide de dispositifs de fermeture à enfichage (5,9).

9. Module d'air-bag selon au moins l'une des revendications précédentes, caractérisé en ce que les dispositifs de fermeture à enfichage sont agencés de telle sorte que sur le capot (4) sont prévus des éléments d'enfichage (9) comportant des lèvres (9a) et auxquelles sont associées, sur le support (3) du générateur de gaz, des fentes (5) comportant des barrettes déformables plastiquement (5a), les lèvres possédant une largeur supérieure aux fentes (5), lorsque les barrettes (5a) ne sont pas déformées.

10. Module d'air-bag selon au moins l'une des revendications précédentes, caractérisé en ce que les rainures profilées (6) du support (3) du générateur de gaz possèdent, dans au moins une dimension, un profil, qui s'écarte de la forme rectiligne.

11. Module d'air-bag selon au moins l'une des revendications précédentes, caractérisé en ce que le support (3) du générateur de gaz est une partie moulée sous pression ou moulée par injection.
